# EUROPÄISCHE PATENTSCHRIFT

(11) **EP 2 262 622 B1**
(45) Veröffentlichungstag und Bekanntmachung des Hinweises auf die Patenterteilung: **21.03.2012**
(21) Anmeldenummer: 09732955.1
(22) Anmeldetag: 02.04.2009
(51) Int. Cl.: B25J 9/00, B23Q 1/01

(54) **ROBOTERANORDNUNG MIT U-FÖRMIGER BEARBEITUNGSPLATTFORM**
ROBOT ARRANGEMENT WITH U-SHAPED PROCESSING PLATFORM
AGENCEMENT DE ROBOTS AVEC PLATE-FORME DE TRAITEMENT EN FORME DE U

(30) Priorität: 17.04.2008 DE 102008019244
(43) Veröffentlichungstag der Anmeldung: 22.12.2010
(73) Patentinhaber: ABB AG, 68309 Mannheim (DE)
(72) Erfinder: DIEDRICH, Franz, 61231 Bad Nauheim (DE)
(86) Internationale Anmeldenummer: PCT/EP2009/002393
(87) Internationale Veröffentlichungsnummer: WO 2009/127327

(56) Entgegenhaltungen:
- EP-A- 1 216 779
- GB-A- 2 263 422
- US-B1- 6 339 204

## Beschreibung

Die Erfindung betrifft eine Roboteranordung mit Roboten, die mit einem Werkstückhalter für die zu bearbeitenden Werkstücke zusammenarbeiten, wobei die Roboter oberhalb eines Arbeitsraumes des Werkstückhalters auf einer im wesentlichen horizontalen, auf Säulen abgestützten Bearbeitungsplattform stehend angeordnet sind. .

Maschinenanordnungen mit einem Roboter und einem Werkstückhalter sind allgemein bekannt. Üblicherweise ist ein Roboter neben einem Werkstückhalter für Werkstücke angeordnet, so dass der Roboterarm von einer Position seitlich des Werkstückhalters in dessen Arbeitsbereich hineinbewegt wird, um die dort befindlichen Werkstücke zu bearbeiten. Der Werkstückhalter ist zumeist hierbei an einem Positioniergerät befestigt, welches den Werkstückhalter in die jeweils erforderliche Position bewegt.

Aus der US-B1-6 339 204 ist eine Roboteranordnung mit drei oberhalb eines Arbeitsraumes, auf einem Gestell stehend an-geordneten Robotern bekannt, die gemeinsam mit einem Positioniergerät mit Werk-stückhalter zusammenarbeiten, wobei das die Roboter aufnehmende Gestell auf Säulen abgestützt ist und wobei das an jedem Roboterarm angeordnete Werkzeug in der Lage ist, das Werkstück zu bearbeiten.

Ausgehend von diesem Stand der Technik ist es Aufgabe der Erfindung, eine Roboteranordnung anzugeben, die bei einfacher Gestaltung auf günstige Weise gestattet, eine Mehrzahl von Robotern in Verbindung mit einem Werkzeughalter so anzuordnen, dass die Zugänglichkeit des Arbeitsraums des Werkstückhalters erhalten bleibt und der Werkstückhalter nicht durch einen Roboter in seiner Beweglichkeit gehindert ist.

Diese Aufgabe wird erfindungsgemäß durch eine Roboteranordnung mit den Merkmalen des Anspruches 1 gelöst.

Gemäß einer Weiterbildung der Erfindung ist die erfindungsgemäße Roboteranordnung dadurch gekennzeichnet, dass die Traverse den Arbeitsraum brückenförmig überspannt und die endseitige anschließenden Schenkel den Arbeitsraum auf gleichem Niveau seitlich einfassen, das heißt, von oberhalb des Arbeitsraums das dort jeweils befindliche Werkstück mit dem betreffenden Werkzeug beaufschlagen.

In vorteilhafter Weise ist erfindungsgemäß vorgesehen, dass die Länge der seitlichen Schenkel so bemessen ist, dass sie gemeinsam mit der brückenförmigen Traverse eine rechteckige Fläche einfassen, nämlich den Arbeitsraum mit dem dort zur Bearbeitung angeordneten Werkstück.

Eine weitere erfindungsgemäße Weiterbildung sieht vor, dass die Traverse mit samt den seitlichen Schenkeln auf vier Säulen abgestützt ist. Dabei ist die Positionierung der Tragsäulen abhängig von den zur Bearbeitung anstehenden Werkstücken vorgesehen.

Wesentlich für Positionsbestimmung der Tragsäulen für die Bearbeitungsplattform ist die gewünschte gute Zugänglichkeit zum Arbeitsraum, das heißt, sowohl für die Werkstückbereitstellung als auch für die Bearbeitung des Werkstücks durch die an den Roboterarmen angeordneten Werkzeuge. Im Hinblick auf diese Maxime ist die Traverse mitsamt den seitlichen Schenkeln vorteilhafterweise auf vier an den Eckpunkten eines Quadrates angeordneten Säulen abgestützt.

Mit einer derartigen Anordnung der erfindungsgemäßen Roboteranordnung ist sichergestellt, dass der von der Traverse mitsamt den seitlichen Schenkeln eingefasste Arbeitsraum ausreichende Beweglichkeit für darin eingebrachte Werkstücke gewährleistet.

Ein bei der erfindungsgemäßen Roboteranordnung umgesetztes und eingehaltenes Prinzip betrifft die stehende Anordnung der Roboter. Mit Einhaltung dieses Prinzips ist eine große Flexibilität der Roboter unter Einhaltung erforderlicher Sicherheitsanforderungen ebenso gewährleistet, wie deren bestmögliche zuverlässige Funktion für die Bearbeitung.

Eine weitere bevorzugte Ausführungsform der erfindungsgemäßen Roboteranordnung ist dadurch gekennzeichnet, dass die Traverse aus Profilelementen zusammengesetzt ist, wobei die Profilelemente vorteilhafterweise derart gestaltet sind, dass die Roboter formschlüssig in den Profilelementen verankert sind.

Darüber hinaus gestattet die erfindungsgemäße Roboteranordnung dass die jeweilige Position der auf der Traverse verankerten Roboter an die Bearbeitungserfordernisse anpassbar ist, so dass auch die Fertigung beziehungsweise Bearbeitung von Kleinserien ermöglicht ist.

Demgemäß erweist es sich als vorteilhaft, dass jeder Roboter ein Werkzeug trägt, welches ein im Werkstückträger befindliches Werkstück von oberhalb des Arbeitsraumes aus bearbeitet. Im Hinblick auf die Bearbeitungsdauer ergibt sich aus dem gleichzeitigen Einsatz der vorgesehenen Roboter für die Bearbeitung ein Zeitvorteil, der sich günstig auswirkt und gegebenenfalls auch eine Erhöhung der verfügbaren Bearbeitungskapazität bedeutet.

Prinzipiell kann entsprechend der erfindungsgemäßen Lehre vorgesehen sein, dass die zuvor ausführlich beschriebene Roboteranordnung auf einem Grundrahmen angeordnet ist, wodurch diese Roboteranordnung als autarke Bearbeitungsstation transportabel ist und somit für beliebig Einsatzorte vorgesehen werden kann.

Gemäß der vorstehenden Erläuterung der Anordnung der Roboter auf einer Bearbeitungsplattform, von der aus sie die jeweils vorgesehenen Bearbeitungsschritte ausführen, und dem Zusammenwirken mit einem Werkstückpositionierer kann stattdessen die mobil einsetzbare Bearbeitungsplattform auch bedarfsweise einem stationären Bearbeitungsraum zugeordnet werden, wo die somit dann verfügbaren Roboter die erforderliche Bearbeitung des betreffenden Werkstückes vornehmen.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: eine schematische Draufsicht auf eine erfindungsge-mäß ausgestaltete Roboteranordnung und
- Fig. 2: eine Schnittansicht der Anordnung gemäß Fig. 1 von der Seite

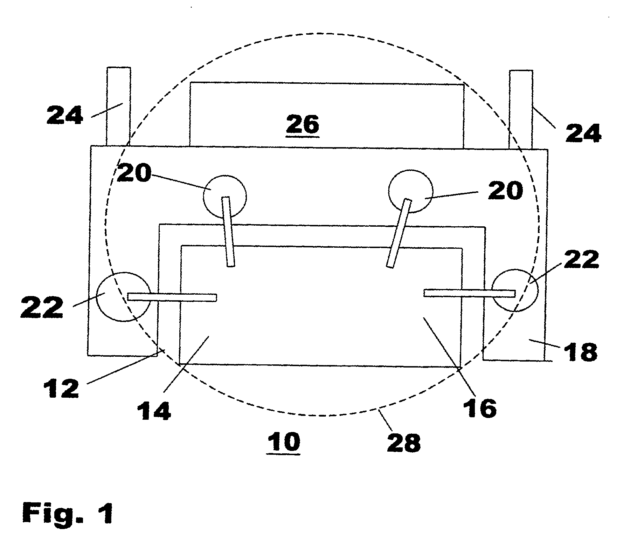

Die in Fig. 1 gezeigte Darstellung zeigt eine schematische Draufsicht auf eine Bearbeitungsplattform 10 sowie einen Arbeitsraum 12 mit einem darin befindlichen Werkstück 16, das von einem Positioniergerät 14 mit Werkstückhalter gehalten ist.

Die Bearbeitungsplattform 10 ist als erhöht angeordnete Traverse 18 mit U-förmigem Grundriss ausgebildet, auf welcher in der gezeigten Ansicht vier Roboter 20, 22 im Abstand zueinander angeordnet sind.

Die Roboter 20, 22 sind als Industrieroboter ausgestaltet und werden demgemäß als an sich bekannter Stand der Technik vorausgesetzt, weshalb auf deren Einzelheiten hier nicht näher eingegangen werden soll.

Das Werkstück 16 seinerseits wird von dem bereits erwähnten, ebenfalls im Arbeitsraum 12 angeordneten Positioniergerät mit einem nur schematisch gezeigten Werkstückhalter 14 gehalten und in die jeweils erforderliche Bearbeitungslage gebracht.

Die im Abstand zueinander über Eck vorgesehene Anordnung der Roboter 20, 22 stellt sicher, dass praktisch alle am betreffenden Werkstück 16 mittels der Roboter 22, 22 vorzunehmenden Bearbeitungsschritte auch tatsächlich durchgeführt werden können, ohne dass es einer zusätzlichen Bewegung des Werkstückes 16 bedarf.

Die vier Roboter 20, 22 sind im gezeigten Beispiel so auf der U-förmigen Traverse 18 positioniert, dass zwei Roboter 20 von dem die Basis bildenden Schenkel der Traverse 18 aus und je ein Roboter 22 von den hierzu im rechten Winkel angrenzenden Seitenschenkeln aus das Werkstück 16 zwecks Bearbeitung beaufschlagen. Wahlweise sind die Roboter 20, 22 jeweils mittels Schraub- beziehungsweise Klemmverbindung an der Traverse 18 befestigt, zum Beispiel an örtlich vorgesehenen Bohrungen oder unter Benutzung eines in die Traverse 18 integrierten Halteprofiles, welch letzteres die beliebige Verstellbarkeit des betreffenden Roboters 20, 22 ermöglicht.

Dabei sind bei der Gestaltung der Bearbeitungsplattform 10, insbesondere bei der konstruktiven Auslegung der U-förmigen Traverse 18 wie auch bei der Auswahl der jeweiligen Roboter 20, 22 die Größe, das heißt Abmessungen und Gewicht, sowie sonstige Einflußgrößen wie Material, Verarbeitungsparameter und Transportmöglichkeiten berücksichtigt.

Mit anderen Worten, die erfindungsgemäße Roboteranordnung ist größenmäßig darauf abgestimmt, dass alle vorgesehenen Bearbeitungsschritte an allen in Betracht kommenden Werkstücken 16 ohne jegliche Behinderung beziehungsweise Störung durch für die Bearbeitung erforderliche Geräte und Werkszeuge durchgeführt werden können.

Die Traverse 18 wird vorzugsweise von zwei an beiden Enden des Basisschenkels der Traverse angeordneten Traggestellen 24 gestützt, die ihrerseits wahlweise ortsfest mit dem Boden verbunden sind und somit eine stationäre Bearbeitungsstation bilden.

Alternativ können die Traggestelle 24 ihrerseits mit einem nicht näher dargestellten Palettengrundrahmen verbunden sein, wodurch die gesamte Anordnung der Bearbeitungsplattform 10 mitsamt der darauf angeordneten Roboter 20, 22 transportable Bearbeitungseinheit bildet und als komplette Bearbeitungseinheit zu beliebigen Bearbeitungseinsätzen transportiert werden kann.

Bezüglich der Handhabung des zur Bearbeitung anstehenden Werkstücks 16 durch den Werkstückhalter beziehungsweise durch das Positioniergerät 14 ist der mögliche sogenannte Störkreis 28 des Werkstückpositionierers 14 eingezeichnet sowie der komplette Werkstückarbeitsraum 26.

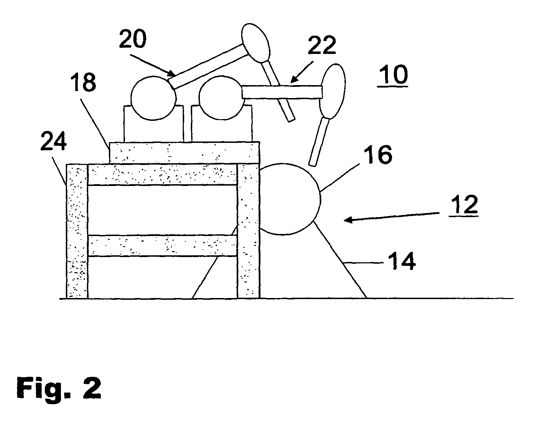

In Fig. 2 ist die Anordnung gemäß Fig. 1 in Schnittansicht von der Seite dargestellt, wobei gleiche Bezugsziffern identische Merkmale bezeichnen.

### Bezugsziffernliste

- 10: Bearbeitungsplattform
- 12: Arbeitsraum
- 14: Positioniergerät mit Werkstückhalter
- 16: Werkstück
- 18: Traverse

- 20: Roboter
- 22: Roboter
- 24: Traggestell
- 26: Werkstückarbeitsraum
- 28: Störkreis des Werkstückpositionierers

## Patentansprüche

1. Roboteranordnung mit wenigstens vier Robotern (20, 22), die mit einem Werkstückhalter (14) für zu bearbeitenden Werkstücke (16) zusammenarbeiten, mit einer im wesentlichen horizontalen Bearbeitungs plattform (10), und mit mindestens zwei Sänlen (2A), auf deren die Bearbeitungsplattform (10) abgestützt ist, wobei die wenigstens vier Roboter (20, 22) oberhalb eines Arbeitsraumes (12) des Werkstückhalters (14) auf der Roboteranordnung Bearbeitungsplattform (10) stehend angeordnet sind, wobei die Bearbeitungsplattform (10) U-förmig als den Arbeitsraum (12) überquerende Traverse mit zwei Seitenschenkeln ausgebildet ist, und wobei auf der Traverse zwei Roboter (20) und auf den Serterschenkeln jeweils ein Roboter (22) jeweils in einem Mindestabstand zueinander angeordnet sind.

2. Roboteranordnung nach einem der vorherigen Ansprüche, **dadurch gekennzeichnet, dass** die Traverse den Arbeitsraum (12) brückenförmig überspannt und die endseitig an den Basisschenkel anschließenden Seitenschenkel den Arbeitsraum (12) auf gleichem Niveau seitlich einfassen.

3. Roboteranordnung (10) nach einem der Ansprüche 1 oder 2, **dadurch gekennzeichnet, dass** die Seitenschenkel in einem rechten Winkel endseitig an den Basisschenkel anschließen.

4. Roboteranordnung nach einem der vorherigen Ansprüche, **dadurch gekennzeichnet, dass** die Länge der seitlichen Schenkel so vorgesehen ist, dass sie gemeinsam mit dem Basisschenkel der brückenförmigen Traverse eine rechteckige Fläche einfassen.

5. Roboteranordnung nach einem der vorherigen Ansprüche, **dadurch gekennzeichnet, dass** die Traverse mit samt den seitlichen Schenkeln auf vier Säulen abgestützt ist.

6. Roboteranordnung nach einem der vorherigen Ansprüche, **dadurch gekennzeichnet, dass** die Traverse mitsamt den seitlichen Schenkeln auf vier an den Eckpunkten eines Quadrates angeordneten Säulen (24) abgestützt ist.

7. Roboteranordnung nach einem der vorherigen Ansprüche, **dadurch gekennzeichnet, dass** der von der Traverse mitsamt den seitlichen Schenkeln eingefasste Arbeitsraum (12) so groß bemessen ist, dass er ausreichende Beweglichkeit für darin eingebrachte Werkstücke (16) gewährleistet.

8. Roboteranordnung nach einem der vorherigen Ansprüche, **dadurch gekennzeichnet, dass** die Traverse aus Profilelementen zusammengesetzt ist.

9. Roboteranordnung nach Anspruch 8, **dadurch gekennzeichnet, dass** die Roboter (20, 22) formschlüssig in den Profilelementen verankert sind.

10. Roboteranordnung nach Anspruch 3 oder 4, **dadurch gekennzeichnet, dass** die jeweilige Position der auf der Traverse verankerten Roboter (20, 22) an die Bearbeitungserfordernisse anpassbar ist.

11. Roboteranordnung nach einem der vorherigen Ansprüche, **dadurch gekennzeichnet, dass** jeder Roboter (20, 22) ein Werkzeug trägt, welches ein im Werkstückhalter (14) befindliches Werkstück (16) von oberhalb des Arbeitsraumes aus bearbeitet.

12. Roboteranordnung nach einem der vorherigen Ansprüche, dadurch ge-kennzeichnet, dass die Säulen als Traggestelle (24) ausgebildet sind.

## Claims

1. Robot arrangement having at least four robots (20, 22) which interact with a workpiece holder (14) for workpieces (16) which are to be processed, having a substantially horizontal processing platform (10) and having at least two pillars (24) on which the processing platform (10) is supported, with the at least four robots (20, 22) being arranged in an upright manner above a working space (12) of the workpiece holder (14) on the processing platform (10), with the processing platform (10) being in the form of a crossmember which crosses the working space (12) and has two side limbs so as to form a U, and with two robots (20) being arranged on the crossmember and one robot (22) being arranged on each of the side limbs, in each case at a minimum distance from one another.

2. Robot arrangement according to Claim 1, **characterized in that** the crossmember spans the working space (12) in the manner of a bridge, and the side limbs, which adjoin the ends of base limb, laterally frame the working space (12) at the same level.

3. Robot arrangement according to one of Claims 1 and 2, **characterized in that** the side limbs adjoin the ends of the base limb at a right angle.

4. Robot arrangement according to one of the preceding claims, **characterized in that** the length of the lateral limbs is such that they frame a rectangular area together with the base limb of the bridge-like crossmember.

5. Robot arrangement according to one of the preceding claims, **characterized in that** the crossmember, together with the lateral limbs, is supported on four pillars.

6. Robot arrangement according to one of the preceding claims, **characterized in that** the crossmember, together with the lateral limbs, is supported on four pillars (24) which are arranged at the corners of a square.

7. Robot arrangement according to one of the preceding claims, **characterized in that** the working space (12), which is framed by the crossmember together with the lateral limbs, is of such a size that it ensures a sufficient degree of mobility for workpieces (16) introduced into it.

8. Robot arrangement according to one of the preceding claims, **characterized in that** the crossmember is made up of profile elements.

9. Robot arrangement according to Claim 8, **characterized in that** the robots (20, 22) are anchored in the profile elements in an interlocking manner.

10. Robot arrangement according to Claim 3 or 4, **characterized in that** the respective position of the robots (20, 22) which are anchored on the crossmember can be matched to the processing requirements.

11. Robot arrangement according to one of the preceding claims, **characterized in that** each robot (20, 22) is fitted with a tool which processes a workpiece (16), which is located in the workpiece holder (14), from above the working space.

12. Robot arrangement according to one of the preceding claims, **characterized in that** the pillars are in the form of a supporting frame (24).

## Revendications

1. Agencement de robots comprenant au moins quatre robots (20, 22) qui coopèrent avec un porte-pièce (14) pour pièces (16) à traiter, une plate-forme de traitement (10) essentiellement horizontale, et au moins deux montants (24) par lesquels la plate-forme de traitement (10) est supportée, les au moins quatre robots (20, 22) étant disposés verticalement sur la plate-forme de traitement (10) au-dessus d'un espace de travail (12) du porte-pièce (14), la plate-forme de traitement (10) étant réalisée en forme de U en tant que traverse dotée de deux branches latérales qui traverse l'espace de travail (12), deux robots (20) étant disposés sur la traverse et un robot (22) étant disposé à chaque fois sur les branches latérales, ces robots étant respectivement disposés à une distance minimale les uns des autres.

2. Agencement de robots selon la revendication 1, **caractérisé en ce que** la traverse enjambe l'espace de travail (12) à la manière d'un pont, et les branches latérales se raccordant à la branche de base du côté de ses extrémités délimitent latéralement l'espace de travail (12) au même niveau.

3. Agencement de robots selon la revendication 1 ou 2, **caractérisé en ce que** les branches latérales se raccordent à angle droit à la branche de base du côté de ses extrémités.

4. Agencement de robots selon l'une quelconque des revendications précédentes, **caractérisé en ce que** la longueur des branches latérales est prévue de telle sorte que ces dernières, conjointement avec la branche de base de la traverse en forme de pont, délimitent une surface rectangulaire.

5. Agencement de robots selon l'une quelconque des revendications précédentes, **caractérisé en ce que** la traverse, y compris les branches latérales, est supportée par quatre montants.

6. Agencement de robots selon l'une quelconque des revendications précédentes, **caractérisé en ce que** la traverse, y compris les branches latérales, est supportée par quatre montants (24) disposés aux coins d'un carré.

7. Agencement de robots selon l'une quelconque des revendications précédentes, **caractérisé en ce que** l'espace de travail (12) délimité par la traverse, y compris les branches latérales, est dimensionné de telle sorte qu'il garantisse une mobilité suffisante pour des pièces (16) qui y sont placées.

8. Agencement de robots selon l'une quelconque des revendications précédentes, **caractérisé en ce que** la traverse est composée d'éléments profilés.

9. Agencement de robots selon la revendication 8, **caractérisé en ce que** les robots (20, 22) sont ancrés par engagement par coopération de formes dans les éléments profilés.

10. Agencement de robots selon la revendication 3 ou 4, **caractérisé en ce que** la position respective des robots (20, 22) ancrés sur la traverse peut être adaptée aux exigences de traitement.

11. Agencement de robots selon l'une quelconque des revendications précédentes, **caractérisé en ce que** chaque robot (20, 22) porte un outil qui traite, par le dessus de l'espace de travail, une pièce (16) se trouvant dans le porte-pièce (14).

12. Agencement de robots selon l'une quelconque des revendications précédentes, **caractérisé en ce que** les montants sont réalisés en tant que bâtis de support (24).
